# EUROPÄISCHE PATENTANMELDUNG

(11) **EP 1 426 213 A2**
(43) Veröffentlichungstag der Anmeldung: **09.06.2004**
(21) Anmeldenummer: 03023405.8
(22) Anmeldetag: 17.10.2003
(51) Int. Cl.: B60H 1/00

(54) **Klimagerät für Fahrzeuge**

(30) Priorität: 03.12.2002 DE 10256619
(71) Anmelder: IAV GMBH INGENIEURGESELLSCHAFT AUTO UND VERKEHR, 10587 Berlin (DE)
(72) Erfinder: Knoke, Achim, 31008 Elze (DE); Osburg, Michael, 38518 Gifhorn (DE); Schroedel, Stephan, 31137 Hildesheim (DE)
(74) Vertreter: Bürger, Peter

(57) **Zusammenfassung**

Die Erfindung betrifft ein Klimagerät für Fahrzeuge, bestehend aus einer Lüfterbaugruppe, einem Verdampfer und einem Wärmetauscher, die in einem gemeinsamen Gehäuse integriert sind, wobei die zu klimatisierende Luft mittels der Lüfterbaugruppe zunächst über eine Lufteintrittsöffnung angesaugt, im weiteren Strömungsweg über den Verdampfer und den Wärmetauscher gefördert und nachfolgend über Öffnungen im Gehäuse dem Fahrzeuginnenraum zugeführt wird. Aufgabe der Erfindung ist es, ein solches Klimagerät zu schaffen, das eine Ausgestaltung der Lüfterbaugruppe mit lediglich geringem Durchmesser bei gleichzeitig breiter Bauweise ermöglicht. Dies wird erreicht, indem die Lüfterbaugruppe (1) zwei separate Radial- oder Querstromlüfter (1a; 1b) aufweist, die in derselben Ebene verlaufen und zwischen denen ein Abstand ("x") verbleibt, in dem eine Lufteintrittsöffnung (8) für beide Lüfter (1a; 1b) ausgestaltet ist.

## Beschreibung

Die Erfindung betrifft ein Klimagerät für Fahrzeuge gemäß dem Oberbegriff des Hauptanspruches.

Allgemein vorbekannt sind Klimageräte für Fahrzeuge dieser Art, bei denen eine Lüfterbaugruppe, ein Filter, ein Verdampfer und ein Wärmetauscher in einem gemeinsamen Gehäuse integriert sind. Die Lüfterbaugruppe weist mindestens einen Lüfter auf. Sofern mit dem Klimagerät eine getrennte Temperaturregelung für die rechte und linke Fahrzeugseite realisiert werden soll, sind zwei Lüfter notwendig. Unabhängig von der jeweils konkreten Ausgestaltung wird die zu klimatisierende Luft mittels der Lüfterbaugruppe zunächst angesaugt und im weiteren Strömungsweg über Filter, Verdampfer und Wärmetauscher gefördert, bevor sie über Öffnungen aus dem Gehäuse des Klimagerätes dem Fahrzeuginnenraum zugeführt wird.

Vorbekannt ist es auch, den Luftstrom im Gehäuse des Klimagerätes auf den Verdampfer und/oder den Kondensator aufzuteilen. Gemäß DE 40 34 289 C 2 wird dies erreicht, indem einer als Radialgebläse ausgestalteten Lüfterbaugruppe ein verstellbares Leitelement zur Aufteilung des Luftstromes zugeordnet wird. Das Leitelement weist ein spiralförmiges Gehäuse mit zumindest einer Austrittsöffnung auf und ist um die Drehachse des Radialgebläses verstellbar. Die Stellung der Austrittsöffnung des Leitelementes bestimmt somit den Strömungspfad. Verdampfer und Kondensator sind hier nicht hintereinander sondern in jeweils anderen Winkelbereichen um das Radialgebläse versetzt angeordnet, um unterschiedliche Abströmwege von Verdampfer und Kondensator zu gewährleisten. Diese Ausführung von Klimageräten ergibt eine wenig kompakte Bauart.

Vorbekannt sind Querstrom- oder Radiallüfter aus DE 100 38 753 A 1, die bei geringem Durchmesser eine relativ breite Bauweise aufweisen und bei denen große Strömungsquerschnitte realisiert werden, die Vorteile im Geräuschverhalten bei Lüftung und Heizung ergeben.

Aufgabe der Erfindung ist es, ein Klimagerät für Fahrzeuge zu schaffen, das eine kompakte Anordnung der flächigen Baugruppen - Filter, Verdampfer Wärmetauscher
- in einem gemeinsamen Gehäuse aufweist, welche eine günstige Strömung zu allen Auströmern ermöglicht. Dabei soll eine Lüfterbaugruppe mit geringem Durchmesser zur Anwendung gelangen.
Diese Aufgabe wird erfindungsgemäß dadurch gelöst, dass
- im oberen Teil des Gehäuses zwischen den Außenkonturen von Lüfterbaugruppe und Luftführungen ein Umluftkanal gebildet ist, der mit dem Innenraum des Fahrzeuges verbunden und mittels eines Schiebers zum Ansaugbereich von einem oder mehreren Lüftern zu öffnen oder zu verschließen ist,
- wobei unterhalb des mit dem Innenraum des Fahrzeuges verbunden Umluftkanals die flächigen Baugruppen - Filter, Verdampfer Wärmetauscher - mit ihrer Längsachse zum Bereich des Umluftkanals und / oder des bzw. der Lüfter gerichtet angeordnet sind.
Es wird ein günstiges Durchströmen der Kanäle mit maximal 180° Umlenkung zu den Ausströmöffnungen möglich, womit ein unaufdringliches Geräuschverhalten im Betrieb von Lüftung bzw. Heizung und gleichzeitig ein kompakter Bauraum erzielt wird.

Erfindungsgemäße Klimageräte können mit geringem Aufwand für verschiedenartige Einbauverhältnisse und unterschiedliche Fahrzeuge modifiziert werden.
Vorteilhafte Ausgestaltungen sind in abhängigen Unteransprüchen beschrieben und werden im Rahmen der nachfolgenden Beschreibung im Zusammenhang mit ihren vorteilhaften Wirkungen näher erläutert.

Ein Ausführungsbeispiel der Erfindung ist in der Zeichnung dargestellt und wird nachfolgend beschrieben. Es zeigen:

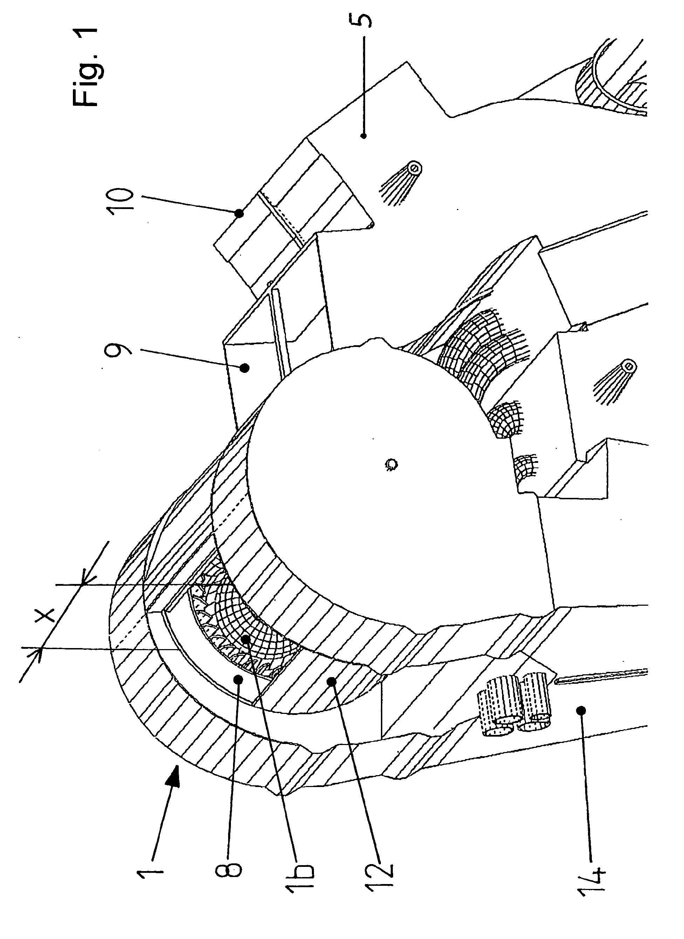

- Fig. 1: eine Teilansicht eines erfindungsgemäßen Klimagerätes in perspektivischer Darstellung,
- Fig. 2: eine Seitenansicht des Klimagerät im Schnittdarstellung,
- Fig. 3: eine schematisierte Teilansicht des erfindungsgemäßen, in einem Fahrzeug angeordneten Klimagerätes.

In der Zeichnung ist ein Klimagerät für Fahrzeuge dargestellt. Das Klimagerät besteht aus Lüfterbaugruppe 1, Filter 2, Verdampfer 3 und einem Wärmetauscher 4, der zum Heizen mit Flüssigkeit beaufschlagt ist und zusätzlich auch mit einer elektrischen Heizeinrichtung versehen sein kann. Alle diese Bestandteile sind in einem Gehäuse 5 integriert.

Erfindungsgemäß wird im oberen Teil des Gehäuses 5 zwischen den Außenkonturen von Lüfterbaugruppe 1 und Luftführungen ein Umluftkanal 13 gebildet, der mit dem Innenraum des Fahrzeuges verbunden ist und mittels des Schiebers 12 zum Ansaugbereich von einem oder mehreren Lüftern 1a; 1b zu öffnen oder zu verschließen ist. Für die Strömungsführung insgesamt günstig sind unterhalb des Umluftkanals 13 mit ihrer Längsachse zum Bereich von Umluftkanal13 und / oder Lüfter 1a; 1b gerichtet Filter 2, Verdampfer 3 und Wärmetauscher 4 angeordnet.

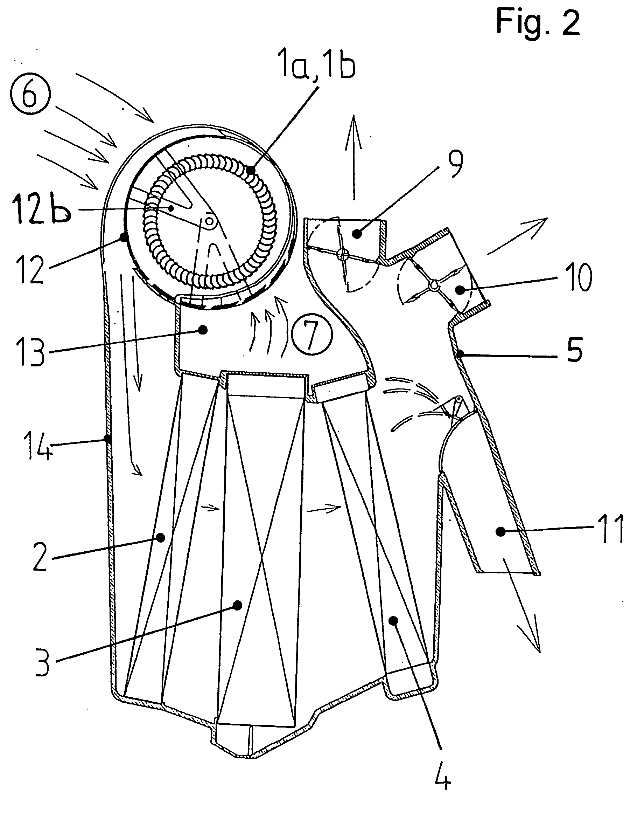

In Abhängigkeit der jeweiligen Stellung des Schiebers 12 wird von beiden Lüftern 1a und 1b entweder aus dem Fahrzeuginnenraum Umluft 7 über den Umluftkanal 13 oder von außen Frischluft 6 über die Lufteintrittsöffnung 8 angesaugt. Die Strömungswege von Frischluft 6 bzw. Umluft 7 sind in Fig. 2 mit Pfeilen stilisiert dargestellt.
Nachfolgend wird Umluft 7 oder Frischluft 6 von der Lüfterbaugruppe 1 nachfolgend über den Filter 2, den Verdampfer 3 und den Wärmetauscher 4 klimatisiert in den Fahrzeuginnenraum gefördert. Entsprechende Strömungswege sind in Fig. 2 ebenfalls mit Pfeilen stilisiert dargestellt.
Die beheizte bzw. klimatisierte Luft wird über Öffnungen im Gehäuse 5 dem Fahrzeuginnenraum verteilt zugeführt. Ein Defrosterkanal weist eine Öffnung 9, ein auf die Insassen gerichteter Kanal die Öffnung 10 und ein in den Fußraum führender Kanal die Öffnung 11 auf. Jeder dieser Kanäle kann eine Einrichtung zum Freigeben bzw. Verschließen seines Querschnittes aufweisen.

Die Lüfterbaugruppe 1 weist vorzugsweise zwei separate Lüfter 1a und 1b auf, die in derselben Ebene verlaufen. Als Lüfter 1a und 1b werden jeweils Radial- oder Querstromlüfter verwendet. Zwischen beiden Lüftern 1a und 1b verbleibt ein Abstand "x", in dem eine in einem Schieber 12 angeordnete Lufteintrittsöffnung 8 mündet. Der Schieber 12 um schließt den Lufteintrittsbereich der Lüfter und ist radial um die Lüfterachse schwenkbar gelagert.

Die Lüfter 1a und 1b saugen durch die Lufteintrittsöffnung 8 Frischluft 6 bzw. Umluft 7 in den freien Bauraum "x" zwischen den Lüftern 1a und 1b je nach Stellung des Schiebers 12. Es wird eine sehr flachbauende Konstruktion für die Lüfterbaugruppe 1 und den einstellbaren Schieber 12 erreicht.
Im Falle, dass die Gebläse 1a und 1b jeweils beidseitig ansaugen, muss die Schiebersteuerung jeweils saugseitig an beiden Seiten der Gebläse vorgesehen werden.

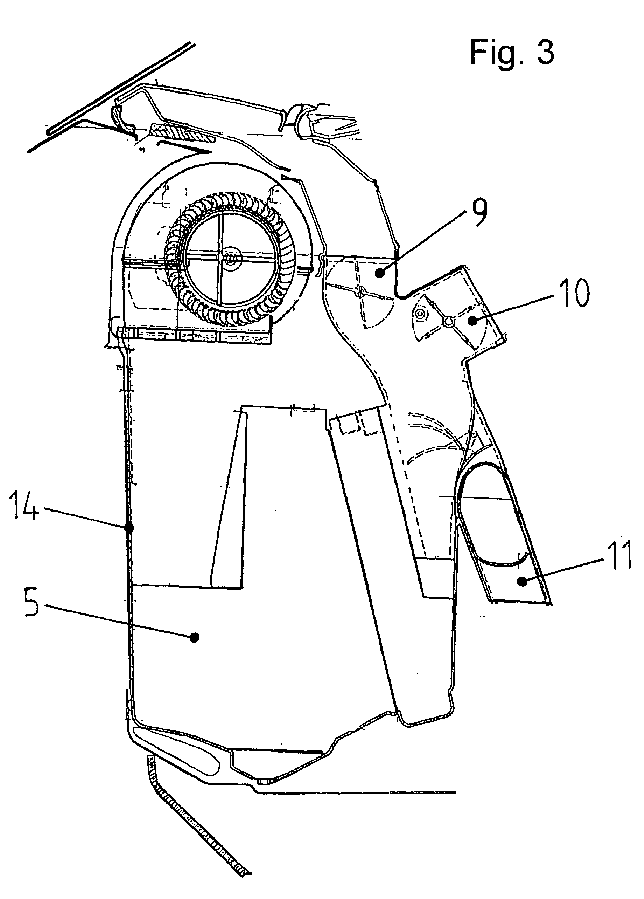

In Fig. 2 sind beispielhaft zwei unterschiedliche Stellungen des Schieber 12 dargestellt und anhand eines, seiner Innenkontur zugeordneten winkelförmigen Betätigungselementes 12 b erkennbar. Dafür ist dieses in der ersten Stellung mit durchgehenden und in der zweiten Stellung mit unterbrochenen Linien dargestellt. Weiterhin weist das Gehäuse 5 zumindest eine Stirnfläche auf, die als Montagefläche verwendet wird. Vorteile ergeben sich, sofern diese Stirnfläche als eine, die Stirnwandkontur bildende Montageplatte 14 ausgestaltet ist. Somit kann im Bereich der Montageposition des Klimagerätes auf eine separate Stirnwand an den angrenzenden Konturen der Fahrzeugkarosserie verzichtet werden. Eine solche Ausgestaltung, die aus Fig. 3 ersichtlich ist, ergibt Material- und Kosteneinsparungen. Vorzugsweise besteht dabei die Montageplatte 14 aus einem den Körperschall dämpfenden Verbundwerkstoff, der ein optimiertes Geräusch- und Dämpfungsverhalten aufweist, welches üblicherweise nur mit doppelwandigem Aufbau und dazwischen angeordnetem Dämmmaterial erreicht wird.

Von den beiden Lüftern 1a und 1b ist jeweils ein Lüfter 1a der Fahrerseite und der andere Lüfter 1b der Beifahrerseite zugeordnet. Dabei können die Lüfter 1a und 1b sowohl gemeinsam als auch voneinander unabhängig angetrieben werden. Sofern den beiden Lüftern 1a und 1b jeweils ein separater Antrieb zugeordnet ist, können für die Fahrerseite und für die Beifahrerseite jeweils unterschiedliche Luftmengen eingestellt werden. Hierfür ist es zweckmäßig, dass der eine, der Fahrerseite zugeordnete Lüfter 1a von der Fahrerseite und der andere, der Beifahrerseite zugeordnete Lüfter 1b von der Beifahrerseite aus einstellbar ist. Somit können Fahrer und Beifahrer eine, für ihr jeweils subjektives Empfinden angenehme Belüftung und Temperatur einstellen.

Zweckmäßig sind die für die Sicht durch die Frontscheibe wesentlichen Betriebsstellungen, "Frischluft oder Umluft" sowie "Scheibenbeheizung oder Innenraumbelüftung", ausschließlich von der Fahrerseite einstellbar.

Diese Funktionen sind für die Fahrsicherheit wesentlich und haben deshalb Vorrang gegenüber ggf. einer anders gewünschten Einstellung der Klimatisierung durch den Beifahrer.

### Aufstellung der Bezugszeichen

- 1: Lüfterbaugruppe
- 1a: erster Lüfter (Fahrerseite)
- 1b: zweiter Lüfter (Beifahrerseite)
- 2: Filter
- 3: Verdampfer
- 4: Wärmetauscher
- 5: Gehäuse
- 6: Frischluft
- 7: Umluft
- 8: Lufteintrittsöffnung
- 9: Öffnung zum Defrosterkanal
- 10: Öffnung zu den Personenausströmern
- 11: Öffnung zu den Fußausströmern
- 12: Schieber
- 12 b: Betätigungselement
- 13: Umluftkanal
- 14: Montageplatte

- "x": Abstand zwischen den Lüftern 1a und 1b

## Patentansprüche

1. Klimagerät für Fahrzeuge, bestehend aus einer Lüfterbaugruppe, Filter Verdampfer und Wärmetauscher, wobei diese Baugruppen in einem gemeinsamen Gehäuse integriert sind und die zu klimatisierende Luft mittels der Lüfterbaugruppe zunächst über eine Lufteintrittsöffnung angesaugt, im weiteren Strömungsweg über Filter, Verdampfer Wärmetauscher gefördert und nachfolgend über verschließbare oder einstellbar freizugebende Öffnungen im Gehäuse dem Fahrzeuginnenraum zugeführt wird,
**gekennzeichnet durch** folgende Merkmale,
- im Gehäuse (5) ist zwischen den Außenkonturen von Lüfterbaugruppe (1) und Luftführungen ein Umluftkanal (13) gebildet, der mit dem Innenraum des Fahrzeuges verbunden ist und mittels des Schiebers (12) zum Ansaugbereich von einem oder mehreren Lüftern (1a; 1b) zu öffnen oder zu verschließen ist,
- unterhalb des Umluftkanals (13) sind mit ihrer Längsachse zum Bereich von Umluftkanal (13) und / oder Lüfter (1a; 1b) gerichtet Filter (2) , Verdampfer (3) und Wärmetauscher (4) angeordnet.

2. Klimagerät nach Anspruch 1,
**dadurch gekennzeichnet,**
**dass** die Lüfterbaugruppe (1) ein oder mehrere, vorzugsweise zwei Radial- oder Querstromlüfter (1a; 1b) aufweist, die in derselben Ebene verlaufen und zwischen denen ein Abstand ("x") verbleibt, in dem eine Lufteintrittsöffnung (8) für den oder die Lüfter (1a; 1b) ausgestaltet ist.

3. Klimagerät nach Anspruch 1 und 2,
**dadurch gekennzeichnet,**
**dass** die Lufteintrittsöffnung (8) der Lüfterbaugruppe (1) mit einem Schieber (12) regelbar ist, der die Lufteintrittsöffnung (8) zylinderförmig umgreift und radial drehbare Steueröffnungen aufweist.

4. Klimagerät nach Anspruch 1,
**dadurch gekennzeichnet,**
**dass** das Gehäuse (5) an der dem Fahrzeug zugeordneten Montagefläche als eine, die Stirnwandkontur des Fahrzeuges bildende Montageplatte (14) ausgestaltet ist.

5. Klimagerät nach den Ansprüchen 1 und 4,
**dadurch gekennzeichnet,**
**dass** die Montageplatte (14) aus körperschalldämpfendem Verbundwerkstoff besteht.

6. Klimagerät nach Anspruch 1,
**dadurch gekennzeichnet,**
**dass** beide Lüfter (1a; 1b) einen gemeinsamen Antrieb aufweisen.

7. Klimagerät nach Anspruch 1,
**dadurch gekennzeichnet,**
**dass** den beiden Lüftern (1a; 1b) jeweils ein separater Antrieb zugeordnet ist.

8. Klimagerät nach Anspruch 1,
**dadurch gekennzeichnet,**
**dass** der eine Lüfter (1a) der Fahrerseite und der andere Lüfter (1b) der Beifahrerseite zugeordnet ist.

9. Klimagerät nach den Ansprüchen 1, 7 und 8,
**dadurch gekennzeichnet,**
**dass** für den, der Fahrerseite zugeordneten Lüfter (1a) und für den, der Beifahrerseite zugeordneten Lüfter (1b) jeweils unterschiedliche Temperaturen und Luftmengen einstellbar sind.

10. Klimagerät nach den Ansprüchen 1, 6 oder 7 sowie 8,
**dadurch gekennzeichnet,**
**dass** die alternativen Betriebsstellungen "Frischluft oder Umluft" und "Scheibenbeheizung oder Innenraumbelüftung" ausschließlich von der Fahrerseite aus einstellbar sind.
